# EUROPEAN PATENT APPLICATION

(11) **EP 4 459 547 A1**
(43) Date of publication of application: **06.11.2024**
(21) Application number: 24174375.6
(22) Date of filing: 06.05.2024
(51) Int. Cl.: G06T 7/00, C14B 17/00

(54) **METHOD FOR THE ANALYSIS OF SURFACE DEFECTS**

(30) Priority: 04.05.2023 IT 202300008838
(71) Applicant: AITEM S.r.l., 10129 Torino (TO) (IT)
(72) Inventor: TRICARICO, Davide, 10129 Torino (IT); IMANPOUR, Farzad, 10129 Torino (IT); SCAFFIDI GENNARINO, Daniele, 10129 Torino (IT); ALFARANO, Giulio, 10129 Torino (IT)
(74) Representative: Bruni, Giovanni

(57) **Abstract**

*Method for the analysis of surface defects of substantially two-dimensional products, the method being suitable for implementation on personal computers or other similar devices, the method comprising the following phases:*
- *arranging a product in substantially two-dimensional development on a work surface, near an optical means,*
*- acquiring images of the product in substantially two-dimensional development by means of the optical means,*
*- analyzing the images by means of software, based on artificial intelligence, implemented on a computer or other analysis device, including mobile device,*
*- visualizing the result of the defect analysis on a screen,*
*- storing the collected data on physical devices for production documentation, and*
*- archiving the collected data on virtual devices.*

## Description

### Technical Field of the Invention

The present invention is related to a method for the analysis of surface defects of substantially two-dimensional products. In particular, the method is suitable, although not exclusively, for the analysis of textile products and their components. Even more particularly, the method is suitable for detecting defects on leather or leather components and this category of products will be analyzed in detail below, but purely for illustrative purposes. This methodology includes an image analysis model, based on artificial intelligence (AI).

### Background art

Methods of analyzing textile products, in particular leather or leather components, based on artificial intelligence are known.

For example, a leather inspection system that uses a deep learning model is known. The leather inspection system includes: a plurality of blocks into which leather is placed to inspect a leather defect; illumination means emitting inspection light onto the surface of the skin; image acquisition means; flaw detection means that detects a tiny flaw existing on the surface of the skin using a deep learning model based on the skin image obtained by the image acquisition means. The illumination means includes a first polarizing film that converts light emitted from a light source into polarized light to be emitted onto the skin surface, and the image acquisition means includes a second polarizing film that receives light reflected from the skin surface.

According to another example, an automatic skin defect detection method and device based on unsupervised learning is known, belonging to the field of skin detection. The method includes: building the auto-encoder as a network model; train the network model using the defect-free skin sample image; insert the skin image to be detected into the trained network model to generate the reconstructed image; generating a reconstruction residual according to the reconstructed image and the skin image to be detected, combining the reconstruction residual generated by the plurality of channels to obtain the residual error map; judge whether the skin image to be detected has a defect, generating a skin defect detection result.

According to a further example, a method and device for detecting leather defects are known, again belonging to the field of leather detection. The method includes: obtaining the image of the skin sample to be detected; build an adaptive model of the skin defect domain based on migration learning; insert the skin sample image into the adaptive model of the skin defect domain for detection, obtaining the skin defect detection result.

All the aforementioned methods, however, do not allow the process of identifying defects on a substantially two-dimensional product to be interactively and exhaustively automated, in particular a textile product or one of its components, for example leather.

There is therefore a need to define an innovative methodology for the analysis of surface defects, which is free from the drawbacks mentioned above.

### Summary of the invention

To substantially resolve the technical problems highlighted above, an aim of the present invention is to define a method for the analysis of surface defects, in particular on leather or in any case on any product with substantially two-dimensional development, based on image analysis through artificial intelligence algorithms.

Therefore, according to the present invention, a method is provided for the analysis of surface defects, based on artificial intelligence and having the characteristics set out in the process claim, attached to this description.

Further embodiments of the invention, preferred and/or particularly advantageous, are described according to the characteristics set out in the attached dependent claims.

### Brief description of the drawings

The invention will now be described with reference to the attached drawings, which illustrate some non-limiting implementation examples, in which:
- figure 1 is a block diagram of the method for the analysis of textile products, according to a preferred embodiment of the present invention, and
- figure 2 is a block diagram of a phase of the method of figure 1.

### Detailed Description

By way of example and not by way of limitation, the method for the analysis of surface defects, according to the present invention, will now be described with reference to the aforementioned figures. Reference is made, for simplicity and purely for illustrative purposes, to the area of leather. However, as will become clear below, this method also finds application in other areas of the textile sector and, more generally, it can be applied to any type of product having a substantially two-dimensional development, for example metal, wooden, glass sheets, etc.

The method is suitable for implementation on personal computers or other similar devices, using specific computer software and/or software application for mobile devices.

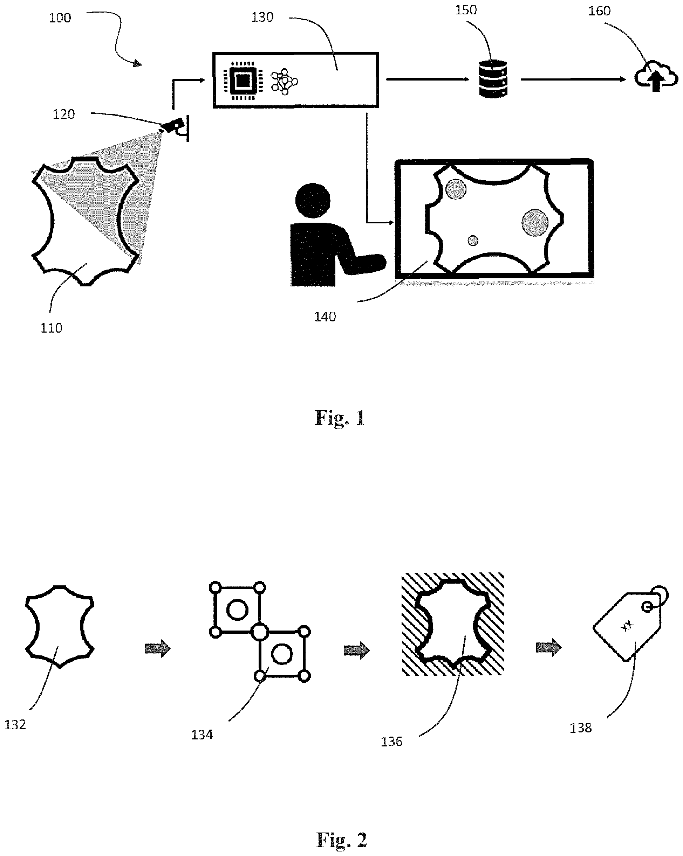

With reference to figure 1, method 100 for analyzing surface defects essentially includes the following phases:
- arranging 110 a product with substantially two-dimensional development, for example a skin, on a work surface, close to an optical medium,
- acquiring 120 images of the skin using an optical medium, for example a high-resolution camera,
- analyzing 130 images using special software, based on artificial intelligence, implemented on a computer or other analysis device, including mobile,
- displaying 140, by an operator, the result of the defect analysis on a screen,
- storing 150 collected data on physical devices for production documentation, and
- storing 160 the data collected on virtual devices (for example, on a cloud) to make them available to anyone.

The step 110 of arranging a product with substantially two-dimensional development on a work surface, for example a textile product and more particularly a leather, includes both the step of manually positioning (by an operator) leather parts on a support, for example a table, and, in a more industrial scenario, to replenish the work surface with leather parts through an automated process.

Conveniently, to facilitate artificial intelligence (AI) based analysis, the support can be coated with a high-contrast color, so that it is more immediate to discriminate the skin from the table surface.

Advantageously, the support can also include features that maximize skin adhesion, for example, by means of suction jets.

The step 140 of displaying the result of the defect analysis (by means of artificial intelligence) on a screen, for example a touchscreen, is an interactive step between the analysis software and the operator and may include the following steps:
- marking defects by means of graphic elements such as: bounding boxes, red marks, etc.,
- estimating, again by means of artificial intelligence, and then display various parameters: the area, width, height and quality level,
- correcting, by the operator, the results obtained by touching an identified defect to deselect it (in case of false alarms), tapping on an unidentified defect to mark it (in case of missed defect), touching the estimated parameters and entering the value correct,
- confirming the results obtained by touching a confirmation button, and save all the results.

The step 160 of storing the data collected on virtual devices is a step with a high degree of interactivity and can be considered exhaustive as it allows multiple AI-based services. Phase 160 may include the following steps:
- uploading saved results to the virtual device, such as a cloud-based service,
- interacting via an interactive interface (for example a website). Interaction with the website may allow you to:
- accessing to their data by leather industry operators,
- running additional AI-based services leveraging cloud hardware,
- sharing data with other users such as suppliers or customers, for example, to support disputes or avoid shipping unexpected products to customers,
- retraining the parameters of artificial intelligence models to improve analysis performance.

With reference to figure 2, the step 130 of analyzing the images by means of specific software essentially includes the following steps:
- viewing 132 skins,
- identifying 134 a defect using an initial "deep learning" model,
- eliminating 136 the background by means of a second deep learning model, e
- filtering 138 label images from the results to be analyzed by means of a third deep learning model. More generally, this step aims to eliminate all irrelevant defects from the results to be analyzed.

Preferably, the step of identifying 134 a defect using a first deep learning model requires that, for each image, this first model calculates the localization of the defective areas by specifying:
X: horizontal starting point of the defect
Y: vertical starting point of the defect
Width: horizontal length of the defect
Height: vertical length of the defect
Confidence level: index of the reliability of the defect identification.

The model will only consider defects with a confidence level above a predetermined and calibratable threshold.

Conveniently, this first deep learning model can be pre-trained via self-supervised contrastive learning technique, using a large corpus of leather product images. The model annotates a smaller set of images, identifying defects and, for each annotation, extracts the coordinates of the rectangular area in which it is contained. Next, the deep learning model improves through supervised learning, using annotated data to identify defects.

Preferably, the step of eliminating 136 the background by means of a second deep learning model includes the elimination of non-skin-related defects (e.g., the support table, the operator's hands, the ground, etc.)

This second deep learning model is a segmentation model that is used to separate skin pixels from background pixels.

This second model can also be pre-trained by annotating a series of images and marking the areas that represent skin and the areas that do not. Then, using supervised learning, the segmentation model is trained.

Advantageously, the step of filtering 138 images of labels from the results to be analyzed by means of a third deep learning model has the objective of discarding the defects that are linked to the labels or other objects that are systematically present on the leather, because relevant.

The third model is therefore dedicated to the analysis of each of the identified defects, in particular, checking whether their size is compatible with the target objects, to discard irrelevant defects.

This third model can also be pre-trained by annotating a series of images and marking them as relevant or not. Then, using supervised learning, the third model is trained.

Therefore, the method according to the present invention allows to process any defect present in the textile product, in particular in a leather, and to automate the analysis process in an interactive and exhaustive way.

In addition to the ways of implementing the invention, as described above, it should be understood that numerous further variations exist. It must also be understood that said ways of implementation are only exemplary and do not limit neither the object of the invention, nor its applications, nor its possible configurations. On the contrary, although the above description makes it possible for the skilled man to implement the present invention at least according to one of its exemplary configurations, it must be understood that numerous variations of the described components are conceivable, without thereby departing from the object of the invention, as defined in the attached claims.

## Claims

1. Method for the analysis of surface defects of substantially two-dimensional products, the method being suitable for implementation on personal computers or other similar devices, the method comprising the following phases:
- arranging a product in substantially two-dimensional development on a work surface, near an optical means,
- acquiring images of the product in substantially two-dimensional development by means of the optical means,
- analyzing the images by means of software, based on artificial intelligence, implemented on a computer or other analysis device, including mobile device,
- visualizing the result of the defect analysis on a screen,
- storing the collected data on physical devices for production documentation, and
- archiving the collected data on virtual devices;
wherein the phase of analyzing the images by means of suitable software essentially comprises the following steps:
- visualizing the product in substantially two-dimensional development,
- identifying a defect using a first deep learning model,
- eliminating the background by means of a second deep learning model, and
- filtering irrelevant defects from the results to be analyzed by means of a third deep learning mode;
wherein the step of identifying a defect using a first deep learning model provides that, for each image, this first model calculates the location of the defective areas by specifying:
X: horizontal starting point of the defect
Y: vertical starting point of the defect
Width: horizontal length of the defect
Height: vertical length of the defect
Confidence level: index of the reliability of the identification of the defect.

2. Method according to claim 1, wherein the first deep learning model is pre-trained by self-supervised contrastive learning technique.

3. Method according to claim 1, wherein the step of eliminating the background by means of a second deep learning model comprises the elimination of defects not related to the product in substantially two-dimensional development.

4. Method according to claim 1, wherein the second model is pre-trained by annotating a series of images and marking the areas which represent the product in substantially two-dimensional development and the areas which do not.

5. Method according to claim 1, wherein the step of filtering images of irrelevant defects from the results to be analyzed by means of a third deep learning model is configured to discard defects which are related to labels or other irrelevant objects.

6. Method according to claim 5, wherein the third model is pre-trained by annotating a series of images and marking them as relevant or not.

7. Method according to claim 1, wherein the phase of visualizing the result of the defect analysis on a screen comprises the following steps:
- marking defects by means of graphic elements,
- estimating and visualizing area, width, height and quality level,
- correcting the results obtained and entering the correct value,
- confirming the obtained results and saving all the results.

8. Method according to any of the preceding claims, wherein the product in substantially two-dimensional development is a leather or a textile product or a metal product or a wooden product or a glass product.
